# EUROPEAN PATENT APPLICATION

(11) **EP 1 298 666 A2**
(43) Date of publication of application: **02.04.2003**
(21) Application number: 02256717.6
(22) Date of filing: 26.09.2002
(51) Int. Cl.: G11B 27/32, G11B 20/10, G11B 20/12, G11B 20/18, G11C 7/16, G06F 3/06

(54) **Method, apparatus and computer program product for recording additional information on a rewritable recording medium**

(30) Priority: 26.09.2001 JP 2001293898; 15.05.2002 JP 2002139707
(71) Applicant: Ricoh Company, Ltd., Tokyo 143-8555 (JP)
(72) Inventor: Suzuki, Ryoichi, Tokyo 143-8555 (JP)
(74) Representative: Lamb, Martin John Carstairs

(57) **Abstract**

An information recording method for recording additional or modified data with an information recording and reproducing apparatus on a rewritable information recording medium (1) on which previous data, a previous file descriptor group (F), a previous volume descriptor group (V), and a previous anchor (A) are recorded, is provided. The method comprising the steps of recording the additional or modified data on the rewritable information recording medium; recording an additional file descriptor group (F2)on the rewritable information recording medium (1); recording an additional volume descriptor group (V2) on the rewritable information recording medium; and updating the previous anchor (A) recorded on the rewritable information recording medium (1). The additional/modified data recording step, the additional file descriptor group recording step, the additional volume descriptor group recording step, and the anchor updating step are performed in a consecutive manner.

## Description

### BACKGROUND OF THE INVENTION

### Field of the Invention

The present invention relates to an information recording method, an information recording and reproducing apparatus, and a computer program product for recording information on a replaceable information recording medium used in a computer system, such as optical discs (CD, DVD, etc.), magneto-optical discs, magnetic discs (HD, FD, LS120, ZIP, etc.), memory cards (flash ROM, flash RAM, etc.), and so on.

### Discussion of the Background

A method and system for enabling reading of a rewritable optical disc using a standard operating system is known. For example, Japanese Patent publication No. Hei06-064521 discloses a rewritable optical disc managing method and system, in which a physical design of an address conversion mechanism is improved so that a rewritable optical disc can be read using an operating system.

In an information recording and reproducing apparatus that is capable of recording information on an information recording medium, such as an optical disc apparatus, for making a master medium for producing read-only information recording media or for storing information on the information recording medium while maintaining compatibility with information reading-only apparatuses, an information recordable medium such as a CD-R (compact-disc-recordable), in which information once recorded thereon cannot be deleted, is used for the information recording medium. Information for recording including a file system previously created or prepared is transferred to the information recording and reproducing apparatus in a consecutive manner to be recorded on the information recordable medium. Such a method of recording information including a file system on an information recordable medium in a consecutive manner is called a single session or disc-at-once (DAO) recording method.

The content of information recorded on the information recording medium can be changed a plurality of times by using a so-called multi-session recording method, in which an additional file system is recorded on the information recording medium in a unique manner. However, in this case, for reading the recorded information on the information recording medium, an information reading apparatus and software that are compatible with the information recording and reproducing apparatus and software by which the additional file system has been recorded on the information recordable medium are necessary. Further, the number of times the content of information recorded on the information recording medium can be changed is very limited.

On the other hand, a rewritable information recording medium such as a CD-RW (compact-disc-rewritable) can be used a plurality of times for recording information thereon. In this case, when changing information previously recorded on the rewritable information recording medium or recording additional information on the rewritable information recording medium, the previously recorded information on the rewritable information recording medium must be once totally deleted, and then updated information is recorded thereupon, which is troublesome.

Thus, various methods are used in recording additional information on an information recording medium, causing a problem that some information reproducing apparatuses cannot properly reproduce the information recorded on the information recording medium.

### SUMMARY OF THE INVENTION

The present invention has been made in view of the above-discussed and other problems and addresses the above-discussed and other problems.

Preferred embodiments of the present invention provide a novel information recording method, a novel computer program product, and a novel information recording and reproducing apparatus, that record additional information on a rewritable information recording medium while maintaining compatibility with information reading-only apparatuses, and that are capable of producing a master medium for producing read-only information recording media.

According to a preferred embodiment of the present invention, an information recording method for recording additional or modified data with an information recording and reproducing apparatus on a rewritable information recording medium on which previous data, a previous file descriptor group, a previous volume descriptor group, and a previous anchor are recorded is provided. The method includes the steps of recording the additional or modified data on the rewritable information recording medium; recording an additional file descriptor group on the rewritable information recording medium; recording an additional volume descriptor group on the rewritable information recording medium; and updating the previous anchor recorded on the rewritable information recording medium. The additional/modified data recording step, the additional file descriptor group recording step, the additional volume descriptor group recording step, and the anchor updating step are performed in a consecutive manner.

By "consecutive manner" it is meant that the steps are carried out one step after the other, in a single session. The exact order of the steps need not be exactly as specified above. Any order of the steps may be employed, as long as they are carried out one after the other in a single recording operation

In the information recording method, each or some of the previous data, the previous file descriptor group, the previous volume descriptor group, the previous anchor, the additional or modified data, the additional file descriptor group, the additional volume descriptor group, and the updated anchor may be organized to have data lengths equal to or greater than a minimum recording unit allowed by the rewritable information recording medium and the information recording and reproducing apparatus. Further, each or some of the previous data, the previous file descriptor group, and the previous volume descriptor group may be recorded on the rewritable information recording medium such that predetermined margins are kept in respective corresponding recording areas on the rewritable information recording medium after the each or some of the previous data, the previous file descriptor group, and the previous volume descriptor group have been recorded in the respective corresponding recording areas on the rewritable information recording medium. Furthermore, in the additional/modified data, additional file descriptor group, and additional volume descriptor group recording steps, when the predetermined margins kept in the respective corresponding recording areas of the each or some of the previous data, the previous file descriptor group, and the previous volume descriptor group on the rewritable information recording medium are used up, additional recording areas having predetermined sizes may be obtained.

In the information recording method, when a file of the previous data is deleted from the rewritable information recording medium in the additional/modified data recording step, a corresponding file descriptor in the previous file descriptor group may be flagged in the additional file descriptor group recording step, so that a recording area defined by the flagged file descriptor is later used by overwriting.

Further, in the information recording method, in the additional/modified data, additional file descriptor group, or additional volume descriptor group recording step, if an error is detected in or after recording of the additional or modified data, the additional file descriptor group, or the additional volume descriptor group on the rewritable information recording medium, and if the error is not caused by overflowing of a corresponding recording area on the rewritable information recording medium, the additional or modified data, the additional file descriptor group, or the additional volume descriptor group may be recorded on the rewritable information recording medium while avoiding an area on the rewritable information recording medium where the error has occurred.

Furthermore, in the information recording method, in the anchor updating step, if an error is detected in or after recording of the updated anchor, recording of subsequent additional or modified data on the rewritable information recording medium may be inhibited.

According to another preferred embodiment of the present invention, there is provided a carrier medium carrying processor readable code for controlling a processor apparatus to carry out the method of the invention.

The present invention may further provide, a computer program product includes a computer storage medium and a computer program code mechanism embedded in the computer storage medium for causing a computer to control recording of additional or modified data with an information recording and reproducing apparatus on a rewritable information recording medium on which previous data, a previous file descriptor group, a previous volume descriptor group, and a previous anchor are recorded. The computer program code mechanism includes a first computer code mechanism configured to record the additional or modified data on the rewritable information recording medium; a second computer code mechanism configured to record an additional file descriptor group on the rewritable information recording medium; a third computer code mechanism configured to record an additional volume descriptor group on the rewritable information recording medium; and a fourth computer coded mechanism configured to update the previous anchor recorded on the rewritable information recording medium. The first computer code mechanism, the second computer code mechanism, the third computer code mechanism, and the fourth computer code mechanism are operated in a consecutive manner.

In the computer program product, each or some of the previous data, the previous file descriptor group, the previous volume descriptor group, the previous anchor, the additional or modified data, the additional file descriptor group, the additional volume descriptor group, and the updated anchor may be organized to have data lengths equal to or greater than a minimum recording unit allowed by the rewritable information recording medium and the information recording and reproducing apparatus. Further, each or some of the previous data, the previous file descriptor group, and the previous volume descriptor group may be recorded on the rewritable information recording medium such that predetermined margins are kept in respective corresponding recording areas on the rewritable information recording medium after the each or some of the previous data, the previous file descriptor group, and the previous volume descriptor group have been recorded in the respective corresponding recording areas on the rewritable information recording medium. Furthermore, when the predetermined margins kept in the respective corresponding recording areas of the each or some of the previous data, the previous file descriptor group, and the previous volume descriptor group on the rewritable information recording medium are used up, additional recording areas having predetermined sizes may be obtained.

In the computer program product, when a file of the previous data is deleted from the rewritable information recording medium, a corresponding file descriptor in the previous file descriptor group may be flagged, so that a recording area defined by the flagged file descriptor is later used by overwriting.

Further, in the computer program product, if an error is detected in or after recording of the additional or modified data, the additional file descriptor group, or the additional volume descriptor group on the rewritable information recording medium, and if the error is not caused by overflowing of a corresponding recording area on the rewritable information recording medium, the additional or modified data, the additional file descriptor group, or the additional volume descriptor group may be recorded on the rewritable information recording medium while avoiding an area on the rewritable information recording medium where the error has occurred.

Furthermore, in the computer program product, if an error is detected in or after recording of the updated anchor, recording of subsequent additional or modified data on the rewritable information recording medium may be inhibited.

The present invention may further provide a computer readable medium storing computer program instructions which when executed by a computer causes an information recording and reproducing apparatus to perform an information recording operation of recording additional or modified data on a rewritable information recording medium on which previous data, a previous file descriptor, a previous volume descriptor, and a previous anchor are recorded is provided. The information recording operation includes the steps of: recording the additional or modified data on the rewritable information recording medium; recording an additional file descriptor group on the rewritable information recording medium; recording an additional volume descriptor group on the rewritable information recording medium; and updating the previous anchor recorded on the rewritable information recording medium. The additional/modified data recording step, the additional file descriptor group recording step, the additional volume descriptor group recording step and the anchor updating step are performed in a consecutive manner.

According to another preferred embodiment of the present invention, an information recording and reproducing apparatus for recording additional or modified data on a rewritable information recording medium on which previous data, a previous file descriptor, a previous volume descriptor, and a previous anchor are recorded is provided. The apparatus includes an additional/modified data recording means configured to record the additional or modified data on the rewritable information recording medium; an additional file descriptor group recording means configured to record an additional file descriptor group on the rewritable information recording medium; an additional volume descriptor recording means configured to record an additional volume descriptor group on the rewritable information recording medium; and an anchor updating means configured to update the previous anchor recorded on the rewritable information recording medium. The additional/modified data recording means, the additional file descriptor group recording means, the additional volume descriptor recording means and the anchor updating means are operated in a consecutive manner.

In the information recording and reproducing apparatus, each or some of the previous data, the previous file descriptor group, the previous volume descriptor group and the previous recorded anchor may be organized to have data lengths equal to or greater than a minimum recording unit allowed by the rewritable information recording medium and the information recording and reproducing apparatus and the additional/modified data recording means, the additional file descriptor group recording means, the additional volume descriptor recording means and the anchor updating means are configured to record the additional/modified data, the additional file descriptor group, the additional volume descriptor group and the updated anchor so that they have a data length equal to or greater than the minimum recording unit allowed by the rewritable information recording medium and the information recording and reproducing apparatus. Further, each or some of the additional/modified data recording means, the additional file descriptor group recording means, the additional volume descriptor recording means and the anchor updating means are configured so that the previous data, the previous file descriptor group, and the previous volume descriptor group may be recorded on the rewritable information recording medium such that predetermined margins are kept in respective corresponding recording areas on the rewritable information recording medium after the each or some of the previous data, the previous file descriptor group, and the previous volume descriptor group have been recorded in the respective corresponding recording areas on the rewritable information recording medium. Furthermore, the additional/modified data recording means, the additional file descriptor group recording means, the additional volume descriptor recording means and the anchor updating means are configured so that when the predetermined margins kept in the respective corresponding recording areas of the each or some of the previous data, the previous file descriptor group, and the previous volume descriptor group on the rewritable information recording medium are used up, additional recording areas having predetermined sizes may be obtained.

In the information recording and reproducing apparatus, the additional/modified data recording means, the additional file descriptor group recording means, the additional volume descriptor recording means and the anchor updating means are configured so that when a file of the previous data is deleted from the rewritable information recording medium, a corresponding file descriptor in the previous file descriptor group may be flagged, so that a recording area defined by the flagged file descriptor is later used by overwriting.

Further, in the information recording and reproducing apparatus, the additional/modified data recording means, the additional file descriptor group recording means, the additional volume descriptor recording means and the anchor updating means are configured so that if an error is detected in or after recording of the additional or modified data, the additional file descriptor group, or the additional volume descriptor group on the rewritable information recording medium, and if the error is not caused by overflowing of a corresponding recording area on the rewritable information recording medium, the additional or modified data, the additional file descriptor group, or the additional volume descriptor group may be recorded on the rewritable information recording medium while avoiding an area on the rewritable information recording medium where the error has occurred.

Furthermore, in the information recording and reproducing apparatus, the additional/modified data recording means, the additional file descriptor group recording means, the additional volume descriptor recording means and the anchor updating means are configured so that if an error is detected in or after recording of the updated anchor, recording of subsequent additional or modified data on the rewritable information recording medium is inhibited.

### BRIEF DESCRIPTION OF THE DRAWINGS

A more complete appreciation of the present invention and many of the attendant advantages thereof will be readily obtained as the same becomes better understood by reference to the following detailed description when considered in conjunction with accompanying drawings, wherein:

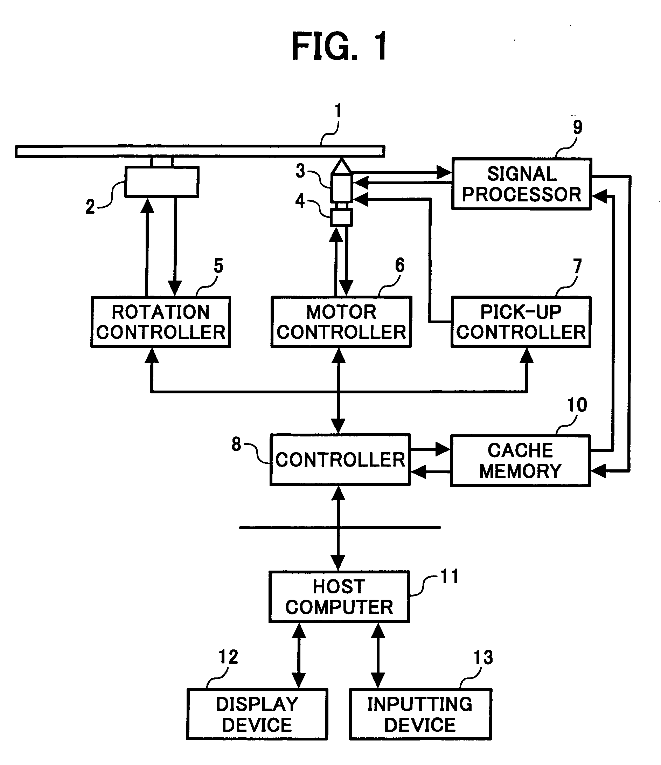

FIG. 1 is a block diagram illustrating an exemplary construction of an information recording and reproducing apparatus according to the first embodiment of the present invention;

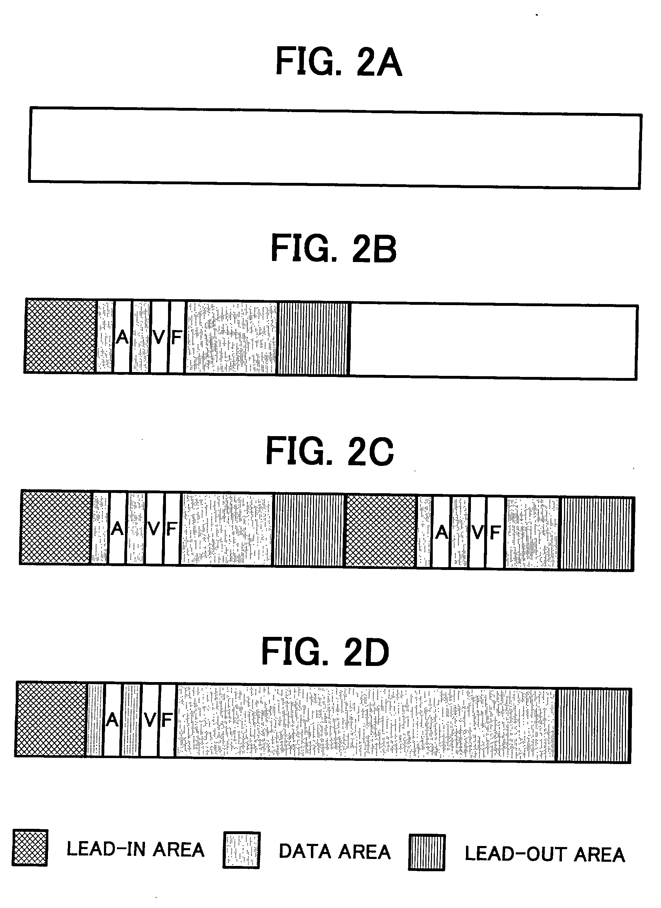

FIGs. 2A to 2D are diagrams illustrating states in which information is recorded on a rewritable information recording medium using a background multi-session information recording method and a background single session information recording method, FIG. 2A illustrating a state of the rewritable information recording medium when no information is recorded thereon, i.e. a blank state, FIG. 2B illustrating a state of the rewritable information recording medium when information has been recorded thereon by the first session of the multi-session information recording method, FIG. 2C illustrating a state of the rewritable information recording medium when information has been recorded thereon by the second session of the multi-session information recording method, and FIG. 2D illustrating a state of the rewritable information recording medium when information has been recorded thereon in the single session or disc-at-once information recording method;

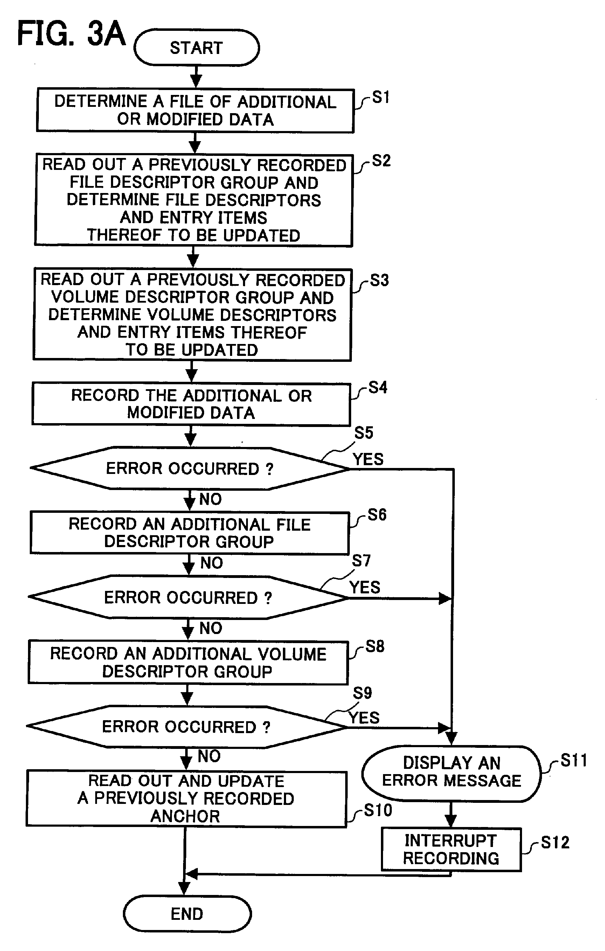

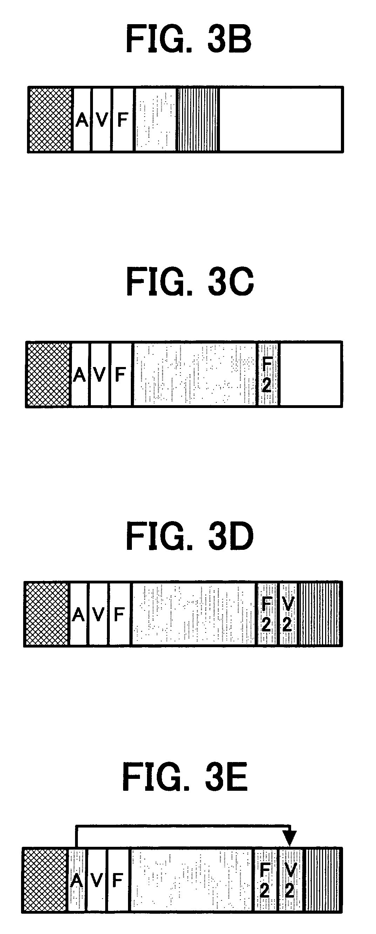

FIG. 3A is a flowchart of recording additional or modified data on a rewritable information recording medium in the information recording and reproducing apparatus of the first embodiment, and FIGs. 3B-3E are diagrams illustrating corresponding states of the rewritable information recording medium;

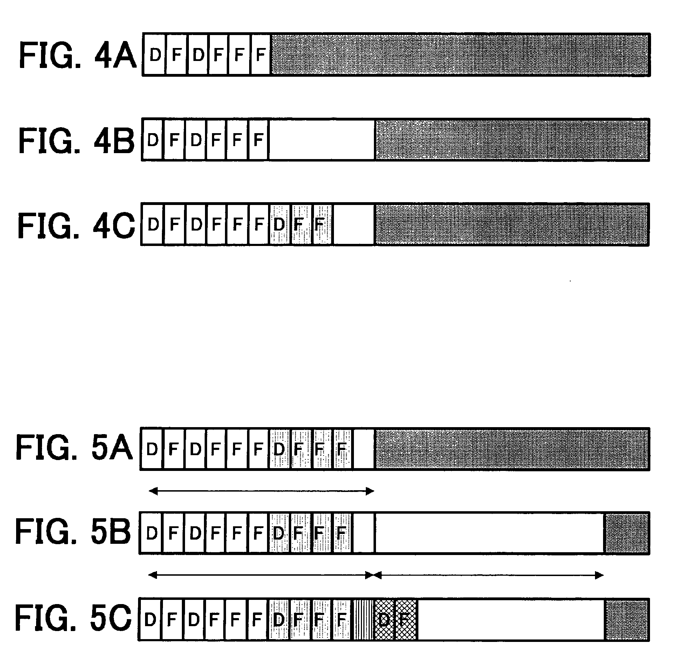

FIGs. 4A-4C are diagrams illustrating states that a file descriptor group that is organized to be equal to or greater than a predetermined minimum data length is recorded in a file descriptor recording area of the rewritable information recording medium, FIG 4A illustrating a state that the file descriptor recording, area is fully utilized, and FIGs. 4B and 4C illustrating states that margins are kept in the file descriptor recording areas after file descriptor groups have been recorded therein respectively, according to the third embodiment of the present invention;
FIGs. 5A-5C are diagrams illustrating states that the file descriptor recording area on the rewritable information recording medium is doubled, according to the fourth embodiment of the present invention;

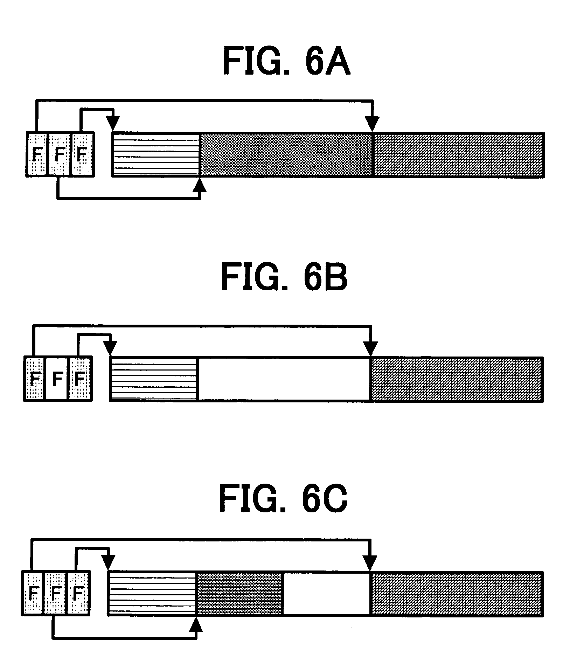

FIGs. 6A-6C are diagrams illustrating a procedure of reusing an area of the rewritable information recording medium from which a previously recorded file has been deleted, according the fifth embodiment of the present invention;

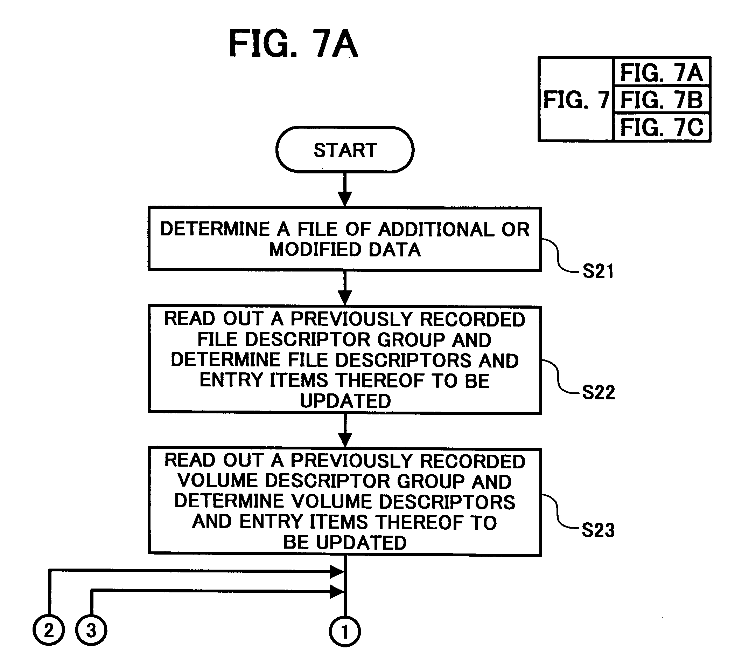

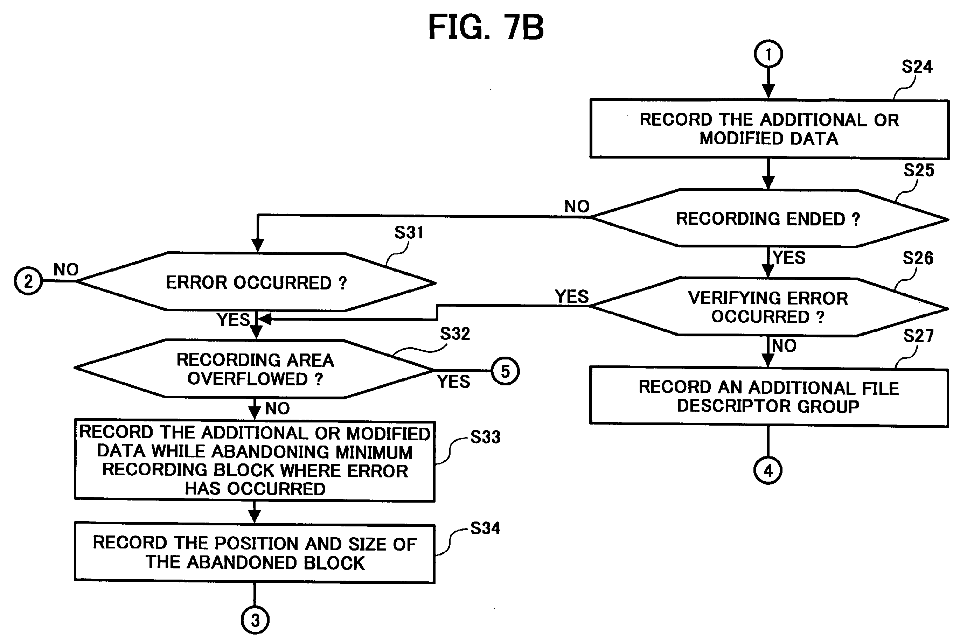

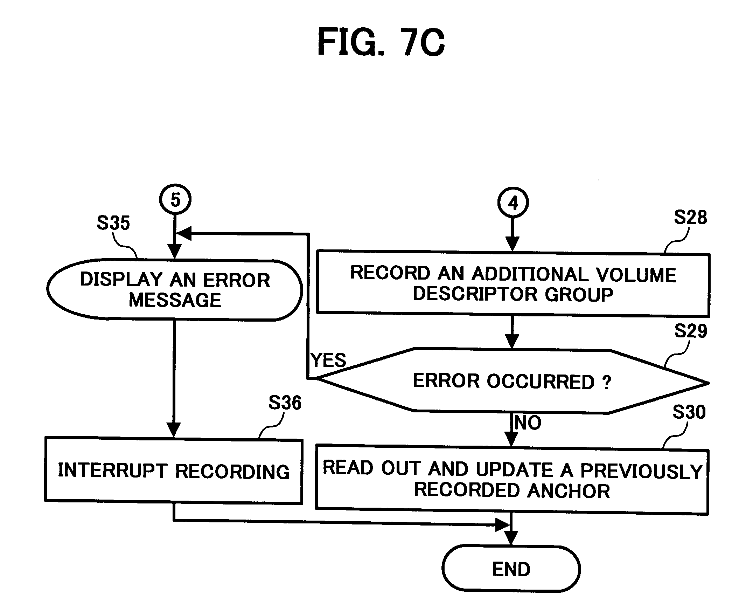

FIGs. 7A-7C are flowcharts illustrating a procedure of recording, when an error occurs in recording additional data on the rewritable information recording medium, the additional data on the rewritable information recording medium while avoiding an area of the rewritable information recording medium where the error has occurred, according to the sixth embodiment of the present invention;

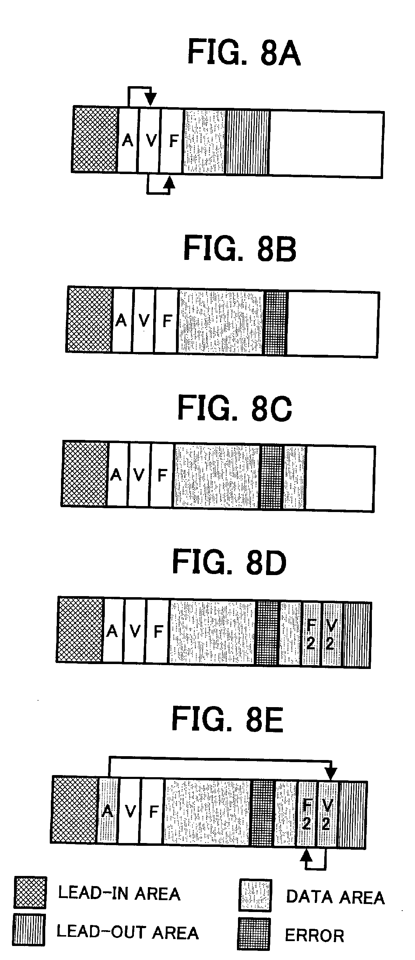

FIGs. 8A-8E are diagrams illustrating states of the rewritable information recording medium when recording additional data on the rewritable information recording medium while avoiding the area of the rewritable information recordable medium where an error has occurred, according to the sixth embodiment; and

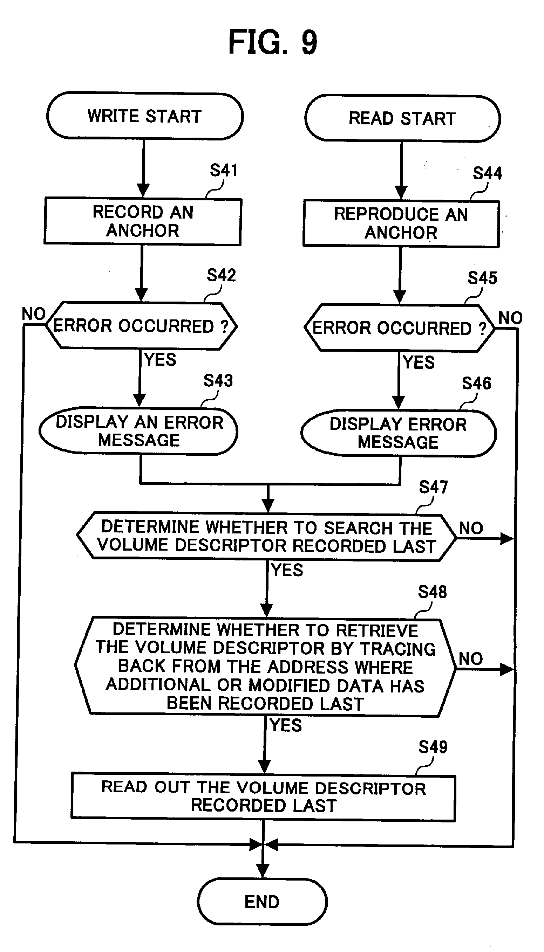

FIG. 9 is a flowchart illustrating a procedure of inhibiting, when an error is detected in recording an anchor on the rewritable information recording medium, subsequent recording of information on the rewritable information recording medium, according to the seventh embodiment of the present invention.

### DETAILED DESCRIPTION OF THE PREFERRED EMBODIMENTS

Referring now to the drawings, wherein like reference numerals designate identical or corresponding parts throughout the several views, preferred embodiments of the present invention are described.

FIG. 1 illustrates an exemplary construction of an information recording and reproducing apparatus according to the first embodiment of the present invention. The information recording and reproducing apparatus includes a motor 2 for rotating a rewritable optical disc 1 (e.g., a CD-RW or DVD), an optical pick-up 3 serving as a recording and reproducing device to record and to reproduce information on and from the rewritable optical disc 1, a seek motor 4 to move the optical pick-up 3 in a radial direction of the optical disc 1, a rotation controller 5 to control rotation of the motor 2, a motor controller 6 to control the seek motor 4, a pick-up controller 7 to control the optical pick-up 3, a controller 8 serving as a control device to control the rotation controller 5, the motor controller 6, and the pick-up controller 7 to operate in a manner described later, a signal processor 9, and a cache memory 10.

Data read from the optical disc 1 by the optical pick-up 3 is processed by the signal processor 9 in a predetermined manner to be stored in the cache memory 10, and the data is then transferred to a host computer 11 by the controller 8. The host computer 11 includes a display device 12 and an inputting device 13, and displays on the display device 12 various warning messages and various messages requesting inputting of instructions by a user. The controller 8 includes registers, non-volatile RAMs, etc. for storing therein various settings.

The controller 8 communicates with the host computer 11 via an external interface. The host computer 11 issues a command and the controller 8 responds to the command, and thereby the controller 8 and the host computer 11 communicate with each other. Data sent from the host computer 11 to the controller 8 is transferred to the optical pick-up 3 by the controller 8 via the cache memory 10 and the signal processor 9. The data is then recorded on the optical disk 1 by the optical pick-up 3. The controller 8 controls respective parts of the information recording and reproducing apparatus so that the data is recorded on the optical disc 1.

Here, for convenience sake, according to the kind of information to be recorded on a rewritable information recording medium, define the following four recording areas on the rewritable information recording medium;
1) an area for recording an anchor, located at a fixed
   address of the rewritable information recording medium, which fixed address is first read when reproducing the information recorded on the rewritable information recording medium
2) an area for recording a volume descriptor
3) an area for recording a file descriptor
4) an area for recording data

A volume descriptor is a descriptor describing a root directory and volume information of the rewritable information recording medium. The volume descriptor defines the volume of the rewritable information recording medium and points to an entry point of a file descriptor group. A file descriptor is a descriptor describing characteristics of data, such as a name of a file and the position of the file in a file directory, and keeps data constituting the file directory. The anchor points to a volume descriptor that has been recorded last.

The controller 8 manages the above-described four recording areas of the rewritable information recording medium, individually. The four recording areas may be put together so that the four recording areas are contiguous to each other or may be separated from each other. The anchor area, the volume descriptor area, and the file descriptor area may be preferably put together because respective area sizes are relatively small. Thereby, the recording and reproducing performance can be increased.

According to a request by a user, additional or modified data may become necessary to be recorded on the rewritable information recording medium. When recording additional or modified data on the rewritable information recording medium, it is necessary to update a file descriptor group previously recorded on the rewritable information recording medium. More specifically, when recording additional data on the rewritable information recording medium, it is necessary to record an additional file descriptor of the additional data on the rewritable information recording medium, and at the same time, some file descriptors in the file descriptor group previously recorded on the rewritable information recording medium, which are affected by recording of the additional data, must be updated. When recording modified data on the rewritable information recording medium, it is necessary to update the file descriptor of a file of the modified data, which is included in the file descriptor group previously recorded on the rewritable information recording medium. Further, some of the other file descriptors in the previously recorded file descriptor group, which are affected by recording of the modified data, must be updated also. When the portion of the previously recorded file descriptor group, which needs to be updated, is large, instead of recording only the updated portion of the previously recorded file descriptor group separately from the previously recorded file descriptor group, an updated previously recorded file descriptor group may be recorded separately from the previously recorded file descriptor group, so that the reproducing performance is increased. Thus, it is preferable that whether to record on the rewritable information recording medium, as an additional file descriptor group, an additional file descriptor for additional data and/or an updated portion of a previously recorded file descriptor group, or the additional file descriptor for additional data and/or an updated previously recorded file descriptor group, is selectable.

When the definition of the volume of a rewritable information recording medium needs to be changed as a result of recording of additional or modified data, a previously recorded volume descriptor group needs to be updated similarly. When the previously recorded volume descriptor group is updated, the anchor needs to be updated. The anchor is overwritten, because the anchor recording area is located at a fixed address.

Here, for facilitating understanding of the embodiments of the present invention, a background method of recording information on a rewritable information recording medium is described. FIG. 2C illustrates a state that information is recorded on a rewritable information recording medium using a background multi-session information recording method, and FIG. 2D illustrates a state that information is recorded on the rewritable information recording medium using a background single session or disc-at-once information recording method. Because logical addresses on the rewritable information recording medium can be linearly accessed regardless of physical shapes of the rewritable information recording medium, the rewritable information recording medium is illustrated in a form of a bar of a single dimension. FIG. 2A illustrates a state of the rewritable information recording medium when no information is recorded, i.e. a blank state, and FIG. 2B illustrates a state of the rewritable information recording medium when information has been recorded by the first session of the multi-session information recording method.

In the multi-session information recording method, information can be recorded again (i.e., second time) on the rewritable information recording medium as illustrated in FIG. 2C in a similar manner as recorded by the first session. The file descriptor for the information recorded second time on the rewritable information recording medium can be made such that the data recorded the first time can be accessed or cannot be accessed.

FIG. 3A illustrates a flow of recording additional or modified data on the rewritable information recording medium 1 in the information recording and reproducing apparatus of the first embodiment, and FIGs. 3B-3E illustrate corresponding states of the rewritable information recording medium 1.

Referring to FIG. 3A, in step S1, when recording additional data on the rewritable information recording medium 1, the controller 8 determines a file of the additional data, and detects the size of the additional data. When recording modified data on the rewritable information recording medium 1, the controller 8 determines a file of the modified data, previously recorded on the rewritable information recording medium 1, and detects the size of the modified data, in step S1. Then, in step S2, the controller 8 reads out a file descriptor group previously recorded on the rewritable information recording medium 1. When recording additional data on the rewritable information recording medium 1, the controller 8 determines an additional file descriptor for the additional data to be recorded on the rewritable information recording medium 1. The controller 8 further determines file descriptors in the previously recorded file descriptor group, which need to be updated as a result of recording of the additional data, determines entry items of those file descriptors in the previously recorded file descriptor group, which need to be changed, and defines the additional file descriptor for the additional data and the updated file descriptors in the previously recorded file descriptor group as an additional file descriptor group to be recorded on the rewritable information recording medium 1. When recording modified data on the rewritable information recording medium 1, the controller determines the file descriptor of the file of the modified data in the previously recorded file descriptor group, which need to be updated, and other file descriptors in the previously recorded file descriptor group, which need to be also updated as a result of recording of the modified data, determines entry items of those file descriptors in the previously recorded file descriptor group, which need to be changed, and defines the updated file descriptors in the previously recorded file descriptor group as the additional file descriptor group to be recorded on the rewritable information recording medium 1. The controller 8 further detects the size of the additional file descriptor group so that the position of recording the additional file descriptor group on the rewritable information recording medium 1 is determined.

Next, in step S3, the controller 8 reads out a previously recorded volume descriptor group. When recording additional data on the rewritable information recording medium 1, the controller 8 determines a volume descriptor for the additional data, determines volume descriptors in the previously recorded volume descriptor group, which need to be updated as a result of recording of the additional data, determines entry items of those volume descriptors in the previously recorded volume descriptor group, which need to be changed, and defines the additional volume descriptor for the additional data and the updated volume descriptors in the previously recorded volume descriptor group as an additional volume descriptor group to be recorded on the rewritable information recording medium 1. When recording modified data on the rewritable information recording medium 1, the controller 8 determines the volume descriptor of the file of the modified data in the previously recorded volume descriptor, which need to be updated, and other volume descriptors in the previously recorded volume descriptor group, which need to be also updated as a result of recording of the modified data, determines entry items of those volume descriptors in the previously recorded volume descriptor group, which need to be changed, and defines the updated volume descriptors in the previously recorded volume descriptor group as an additional volume descriptor group to be recorded on the rewritable information recording medium 1. The controller 8 further detects the size of the additional volume descriptor group so that the position of recording the additional volume descriptor group on the rewritable information recording medium 1 is determined. The controller 8 then controls the optical pick-up 3 to record the additional or modified data on the rewritable information recording medium 1, record the additional file descriptor group, and record the additional volume descriptor group, in steps S4-S8. Further, the controller 8 reads out a previously recorded anchor, determines entry items of the anchor, which need to be changed, and updates the anchor in step S10.

The order of recording additional or modified data, recording an additional file descriptor group, and recording an additional volume descriptor group on the rewritable information recording medium 1 can be in any order, however, the recording performance may be varied depending upon the order. For example, when additional or modified data is recorded first, even if an unrecoverable error occurs during the time the additional or modified data is being recorded, the additional or modified data recorded before the error occurs is hardly affected, so that recovery of the recorded additional or modified data is facilitated. Further, if an additional file descriptor or volume descriptor group is recorded first and an unrecoverable error occurs during the time additional or modified data is being recorded later, the recorded additional file descriptor or volume descriptor group must be rewritten.

When the additional file descriptor group and the additional volume descriptor group are first recorded on the rewritable information recording medium 1, the respective descriptor groups can be recorded at positions close to the forefront address, so that quick reproduction may be facilitated.

The anchor is preferably updated at the last after confirming that the additional or modified data, the additional file descriptor group, and the additional volume descriptor group have been recorded, because the anchor is updated by overwriting.

If an error occurs while additional or modified data, an additional file descriptor group, or an additional volume descriptor group is being recorded, the controller 8 displays an error message on the display device 12, and interrupts the operation of recording thereof.

Now, referring to FIGs. 3B-3E, at the time of recording data on the rewritable information recording medium 1 the first time, an anchor A, a volume descriptor group V, a file descriptor group F, and the data (in the gray area in figure) are sequentially recorded on the rewritable information recording medium 1, as illustrated in FIG. 3B. When recording additional or modified data on the rewritable information recording medium 1, the controller 8 overwrites a previous lead-out data area to record the additional or modified data and an additional file descriptor group F2 as illustrated in FIG. 3C, records an additional volume descriptor group V2 and new lead-out data as illustrated in FIG. 3D, and updates the anchor A as illustrated in FIG. 3E.

As described above, according to the first embodiment of the present invention, an information recording method of recording with an information recording and reproducing apparatus additional or modified data on a rewritable information recording medium, on which previous data, a previous file descriptor group, a previous volume descriptor group, and a previous anchor are recorded, is provided. The method includes the steps of recording additional or modified data on the rewritable information recording medium; recording an additional file descriptor group on the rewritable information recording medium; recording an additional volume descriptor group on the rewritable information recording medium; and updating the anchor previously recorded on the rewritable information recording medium, and the additional/modified data recording step, the additional file descriptor group recording step, the additional volume descriptor group recording step, and the anchor updating step are performed in a consecutive manner. The information recording method enables recording of additional or modified data on a rewritable information recording medium while keeping compatibility with information reading-only apparatuses, and producing of a master medium for use in producing of read-only information recording media.

Generally, information recording and reproducing apparatuses are configured to have limitations on minimum recording and/or reproducing data lengths. For example, in hard discs, the minimum recording data length and the minimum reproducing data length are the same, i.e., 512 bytes. In CD-R/RWs, reproducing is performed for each sector, and recording is performed at least for 300 sectors or more (when recording is performed by a track-at-once method). Accordingly, by organizing data, a file descriptor group, a volume descriptor group, and an anchor to have data lengths greater than minimum recording data lengths allowed in respective information recording and reproducing apparatuses, the trouble of calculating the positions for recording the data, the file descriptor group, the volume descriptor group and the anchor is avoided, so that an information recording method avoiding limitations peculiar to respective information recording and reproducing apparatuses can be realized.

Accordingly, according to the second embodiment of the present invention, in the above-described information recording and reproducing apparatus according to the first embodiment, the controller 8 is configured to organize each or some of the previously recorded data, the previously recorded file descriptor group, the previously recorded volume descriptor group, the previously recorded anchor, the additional or modified data, the additional file descriptor group, the additional volume descriptor group, and the updated anchor to have data lengths equal to or greater than a minimum data length allowed by the rewritable information recording medium 1 and the information recording and reproducing apparatus.

As described above, according to the second embodiment of the present invention, each or some of the previously recorded data, the previously recorded file descriptor group, the previously recorded volume descriptor group, the previously recorded anchor, the additional or modified data, the additional file descriptor group, the additional volume descriptor group, and the updated anchor are organized to have data lengths equal to or greater than the minimum recording unit allowed by the rewritable information recording medium 1 and the information recording and reproducing apparatus. Accordingly, by managing recording of data and descriptors individually for each group of the data and the descriptors, the compatibility with information read-only apparatuses is hardly deteriorated.

Now, the third embodiment of the present invention is described referring to FIGs. 4A-4C. In Figures 4A-4C (and 5A-5C below) D stands for a directory and F stands for a file descriptor group. FIG. 4B illustrates a state of recording a file descriptor group, that is organized to have a predetermined data length greater than the above-described minimum data lengths, on the rewritable information recording medium 1 such that a margin is kept in a file descriptor recording area after the file descriptor group is recorded in the file descriptor recording area. The margin is an area that is embedded with zeros and that cannot be referenced from anywhere. According to the third embodiment, in the information recording and reproducing apparatus according to the first and/or second embodiments, the controller 8 controls the optical pick-up 3 to record each or some of data, a file descriptor group and a volume descriptor group on the rewritable information recording medium 1 such that predetermined margins, that are for example greater than the above-described minimum data lengths, are kept in respective corresponding recording areas on the rewritable information recording medium 1 after the each or some of data, a file descriptor group, and a volume descriptor group are recorded in the respective corresponding recording areas on the rewritable information recording medium 1.

If, for example, a file descriptor recording area is fully utilized in recording of a file descriptor group as illustrated in FIG. 4A, although the space utilization efficiency is satisfactory, when an additional file descriptor for additional data needs to be recorded on the rewritable information recording medium 1 and further some file descriptors in the file descriptor group thus recorded on the rewritable information recording medium 1 need to be updated, such an additional file descriptor and updated file descriptors cannot be recorded in the recording area where the previously recorded file descriptor group is recorded, and an additional file descriptor recording area must be obtained, requiring calculation of the position of the additional file descriptor recording area. In the third embodiment, therefore, as illustrated in FIG. 4B, a file descriptor recording area is organized to have such a size that is large enough to allow a margin to be kept in the file descriptor recording area after recording of a file descriptor group. Thereby, even when some file descriptors in a previously recorded file descriptor group are required to be updated, as illustrated in FIG. 4C, the updated file descriptors can be recorded in the margin kept in the recording area of the previously recorded file descriptor group, so that calculation of the position of an additional file descriptor recording area is not necessary, thus avoiding trouble of such calculation.

As described above, according to the third embodiment of the present invention, each or some of data, a file descriptor group, and a volume descriptor group are recorded on the rewritable information recording medium 1 such that predetermined margins are kept in respective corresponding recording areas on the rewritable information recording medium 1 after the each or some of data, a file descriptor group, and a volume descriptor group are recorded in the respective corresponding recording areas on the rewritable information recording medium 1. Thereby, trouble of calculating the position of an additional data, file descriptor, or volume descriptor recording area is avoided, the compatibility with information reading-only apparatuses is increased, and the speed of recording additional or modified data, additional file descriptor and volume descriptor groups is increased.

Now, the fourth embodiment of the present invention is described referring to FIGs. 5A-5C. According to the fourth embodiment, in the information recording and reproducing apparatus according to the above-described third embodiment, when the margins kept in the respective corresponding recording areas of the each or some of data, a file descriptor group, and a volume descriptor group are used up, the controller 8 obtains additional recording areas having predetermined sizes. For example, the controller 8 doubles the recording areas of a file descriptor group and a volume descriptor group when the margins kept in the respective recording areas are used up, so that additional file descriptor and volume descriptor groups are recorded in the respective recording areas thus doubled.

More specifically, for example, when a file descriptor recording area which has been prepared beforehand is almost fully occupied as a result of recording of an additional file descriptor group in the second time recording as illustrated in FIG. 5A, in the third time recording, as illustrated in FIG. 5B, the file descriptor recording area prepared beforehand is contiguously expanded by two times, and a subsequent additional file descriptor group is recorded in the expanded file descriptor recording area as illustrated in FIG. 5C.

Thus, in the fourth embodiment of the present invention, the areas for recording descriptors are increased only by predetermined amounts. Therefore, even when completely rewriting previously recorded data as illustrated in FIG. 2D or recording additional data at a position shifted from the position of the previously recorded data as illustrated in FIG. 2C, the sizes of respective recording areas for recording descriptor groups can be easily calculated. Accordingly, calculation of the positions of recording subsequent descriptor groups and data can be easy and fast.

As described above, according to the fourth embodiment of the present invention, when each or some of the margins kept in recording areas for recording additional or modified data, an additional file descriptor group, and an additional volume descriptor group on the rewritable information recording medium 1 are used up, additional recording areas having predetermined sizes are obtained for subsequent recording of subsequent additional or modified data or subsequent descriptor groups. Thereby, the speed of recording additional or modified data is increased.

Now, the fifth embodiment of the present invention is described. FIGs. 6A-6C illustrate a procedure of reusing an area of a rewritable information recording medium, from which a previously recorded file has been deleted, according to the fifth embodiment. According to the fifth embodiment of the present invention, in the information recording and reproducing apparatus according to any of the first through fourth embodiments, when the controller 8 deletes, for example as illustrated in FIG. 6B, one of three files recorded on the rewritable information recording medium 1 as illustrated in FIG. 6A, data of the one of three files to be deleted is not actually deleted by being overwritten, but instead, the controller 8 flags the file descriptor defining the data of the one of three files to be deleted.

When recording additional data on the rewritable information recording medium 1, the controller 8 searches for a flagged file descriptor, and if the size of the additional data is equal to or smaller than the size of a recording area defined by the flagged file descriptor and where the data for deletion is recorded, the controller 8 controls the optical pick-up 3 to record the additional data in the recording area where the data for deletion is recorded on the rewritable information recording medium 1, as illustrated in FIG. 6C. The controller 8 may list up in advance flagged file descriptors and sort the flagged file descriptors according to the sizes of recording areas defined by the respective flagged file descriptors. Thereby, areas of the rewritable information recording medium 1 where deleted data is recorded can be used in an efficient manner, and recording of additional or modified data can be quickly performed.

Thus, according to the fifth embodiment of the present invention, when a file of previously recorded data is deleted from a rewritable information recording medium, a corresponding file descriptor of the data in a file descriptor group previously recorded on the rewritable information recording medium is flagged in updating the previously recorded file descriptor group. Thereby, a recording area defined by the flagged file descriptor can be later used by overwriting in recording of additional or modified data, so that the recording capacity of the rewritable information recording medium is effectively used.

FIGs. 7A-7C illustrate a procedure of recording, when an error has occurred in recording additional or modified data on a rewritable information recording medium, the additional or modified data on the rewritable information recording medium while avoiding an area of the rewritable information recording medium where the error has occurred, according to the sixth embodiment of the present invention. FIGs. 8A-8E are diagrams illustrating states of the rewritable information recording medium when recording additional data on the rewritable information recording medium while avoiding the area of the rewritable information medium where the error has occurred.

According to the sixth embodiment, in any of the above-described first through fifth embodiments, after determining a file of the additional or modified data (step S21), the controller 8 determines an additional file descriptor group to be recorded on the rewritable information recording medium 1 (step S22), and further determines an additional volume descriptor group to be recorded on the rewritable information recording medium (step S23), in a similar manner as described above with reference to FIG. 3A.

The controller 8 then controls the optical pick-up 3 to record the additional or modified data on the rewritable information recording medium 1 (step S24). If an error (a writing error or a reading error after writing) occurs while recording the additional or modified data (yes in step S31), or a verifying error occurs while verifying the recorded additional or modified data (yes in S26), as illustrated in FIG. 8B, and if the error is not caused by overflowing of a recording area for recording the additional or modified data with the additional or modified data (no in step S32), the controller 8 controls the optical pick-up 3 to record the additional or modified data on the rewritable information recording medium 1 while avoiding the area where the error has occurred (step S33), as illustrated in FIG. 8C. In this case, the controller 8 controls the optical pick-up 3 to record the additional or modified data, while abandoning a minimum recording block including the area where the error has occurred, in an area contiguous with the abandoned minimum recording block, on the rewritable information recording medium 1. The controller 8 memorizes the position of the abandoned block and the size of the abandoned block for use later in calculating the position of recording the additional file descriptor group (step S34). When the error is caused by overflowing of the data recording area with the additional or modified data (yes in step S32), because overflowed data cannot be recovered, the controller 8 displays an error message in the display device 12 of the host computer 11 (step S35), and interrupts the operation of recording the additional or modified data on the rewritable information recording medium 1 (step S36).

After completing recording of the additional or modified data, the controller 8 controls the optical pick-up 3 to record the additional file descriptor group on the rewritable information recording medium 1 (step S27). As described, if an error occurs in recording the additional or modified data and if the error is not caused by overflowing of the data recording area for recording the additional or modified data with the additional or modified data, the controller 8 controls the optical pick-up 3 to record the additional or modified data on the rewritable information recording medium 1 while abandoning the minimum recording block including the area where the error has occurred. Accordingly, in this case, file descriptors of the data recorded after the error has occurred are affected by the error. Therefore, as illustrated in FIG. 8D, the controller 8 controls the optical pick-up 3 to record an additional file descriptor group F2 on the rewritable information recording medium 1 after performing recalculation of the position of recording the data recorded after the error (in often cases, calculation for offsetting a deviation in the recording position) while considering and reflecting the position of the abandoned block. Further, the controller 8 controls the optical pick-up 3 to record an additional volume descriptor group V2 (step S28), and after confirming that recording of the additional or modified data, the additional file descriptor group F2 and the additional volume descriptor group V2 have been safely recorded (step S29), the controller 8 controls the optical pick-up 3 to update the anchor (step S30), as illustrated 8E.

In this embodiment, in recording the additional descriptor groups and the updated anchor, an error recovery process is not performed, because each data size is relatively small as compared with data and thereby the probability that a recording error occurs in recording the additional descriptor groups and the updated anchor is relatively small. However, when a recording error has occurred in recording an additional descriptor group or an updated anchor, a similar error recovery process as described above can be performed.

As described above, in the sixth embodiment of the present invention, when an error is detected in or after recording of additional or modified data, an additional file descriptor group, or an additional volume descriptor group on a rewritable information recording medium, recording of the additional or modified data, the additional file descriptor group, or the additional volume descriptor group is performed while avoiding an area where the error has occurred. Thereby, relatively high compatibility with information reading-only apparatuses and usability are realized.

Now, the seventh embodiment of the present invention is described. FIG. 9 illustrates a procedure of inhibiting subsequent recording of additional or modified data on a rewritable information recording medium when an anchor cannot be recorded or reproduced, according to the seventh embodiment. According to the seventh embodiment, in the information recording and reproducing apparatus according to any of the first through sixth embodiments, the controller 8 records an anchor on the rewritable information recording medium 1 or reproduces the anchor (step S41 or S44) and judges if an error (a reading error, a writing error, or a verifying error after writing) has occurred (step S42 or S45). When an error has occurred in recording or reproducing of the anchor, the controller 8 displays on the display device 12 a message indicating that recording and/or reproducing of the anchor cannot be performed due to the error and inhibits subsequent recording of additional or modified data on the rewritable information recording medium 1 (step S43 or S46).

Then, the controller 8 determines whether or not to read out the volume descriptor which has been recorded last on the rewritable information recording medium 1 (step S47). When the controller 8 determines to read out the volume descriptor recorded last on the rewritable information recording medium 1 (yes in step S47), the controller 8 determines whether to retrieve the volume descriptor by tracing back from the address where additional or modified data has been recorded last (step S48).

When the controller 8 determines to retrieve the volume descriptor recorded last by tracing back from the address where additional or modified data has been recorded last and when the volume descriptor is found (yes in step S48), the controller 8 reads out the volume descriptor and performs a recovery process for the additional or modified data recorded last (step S49). When the volume descriptor last recorded is not found (no in step S48), the process ends.

As described above, according to the seventh embodiment of the present invention, when an error is found in or after recording of an anchor on the rewritable information recording medium 1 and thereby recording and reproducing are disabled in an anchor recording area, which is an entry point to a file system and which is thereby always accessed, subsequent recording of additional or modified data on the rewritable information recording medium 1 is inhibited. Further, additional or modified data which has been recorded last might be recovered by attempting to retrieve the volume descriptor recorded last, as described above. Thus, an information recording and reproducing apparatus having a possibility of recovering recorded data and thereby achieving relatively high usability is realized.

The mechanism and processes set forth in the present description may be implemented using a conventional general purpose microprocessor programmed according to the teachings in the present specification, as will be appreciated to those skilled in the relevant arts. In particular, the mechanism and processes may be implemented by the controller 8 or the host computer 11 of the information recording and reproducing apparatus schematically illustrated in FIG. 1. The controller 8 can be a conventional general purpose microprocessor or a computer programmed according the teachings in the present specification. Appropriate software coding can be readily be prepared by skilled programmers based on the teachings of the present disclosure, as will also be apparent to those skilled in the relevant arts.

The present invention thus includes a computer program product which may be hosted on a storage medium and include instructions which can be used to program a microprocessor to perform a process in accordance with the present invention. The storage medium can include, but is not limited to, any type of disk including floppy disks, optical disks, CD-ROMs, magneto-optical disks, ROMs, RAMs, EPROMs, EEPROMs, flash memory, magnetic or optical cards, or any type of media suitable for storing electronic instructions.

The carrier medium may comprise a signal transmitted via a communication network or via a wireless transmission system.

Numerous additional modifications and variations of the present invention are possible in light of the above teachings. It is therefore to be understood that within the scope of the appended claims, the present invention may be practiced otherwise than as specifically described herein.

The present application claims priority and contains subject matter related to Japanese Patent Applications No. 2001-293898 and NO. 2002-139707 filed in the Japanese Patent Office on September 26, 2001 and May 15, 2002, respectively, and the entire contents of which are hereby incorporated by reference.

## Claims

1. An information recording method for recording additional or modified data with an information recording and reproducing apparatus on a rewritable information recording medium (1) on which previous data, a previous file descriptor group (F), a previous volume descriptor group (V), and a previous anchor (A) are recorded,**characterized in that** the method comprises the steps of:
recording the additional or modified data on the rewritable information recording medium (1);
recording an additional file descriptor group (F2) on the rewritable information recording medium (1);
recording an additional volume descriptor group (V2) on the rewritable information recording medium; and
updating the previous anchor (A) recorded on the rewritable information recording medium (1),
wherein the additional/modified data recording step, the additional file descriptor group recording step, the additional volume descriptor group recording step, and the anchor updating step are performed in a consecutive manner.

2. The information recording method according to Claim 1, wherein each or some of the previous data, the previous file descriptor group (F), the previous volume descriptor group (V), the previous anchor (A), the additional or modified data, the additional file descriptor group (F2), the additional volume descriptor group (V2), and the updated anchor (A) are organized to have data lengths equal to or greater than a minimum recording unit allowed by the rewritable information recording medium (1) and the information recording and reproducing apparatus.

3. The information recording method according to Claim 2, wherein each or some of the previous data, the previous file descriptor group (F), and the previous volume descriptor group (V) are recorded on the rewritable information recording medium (1) such that predetermined margins are kept in respective corresponding recording areas on the rewritable information recording medium (1) after the each or some of the previous data, the previous file descriptor group (F), and the previous volume descriptor group (V) have been recorded in the respective corresponding recording areas on the rewritable information recording medium (1).

4. The information recording method according to Claim 3, wherein, in the additional/modified data, additional file descriptor group (F2), and additional volume descriptor group (V2)recording steps, when the predetermined margins kept in the respective corresponding recording areas of the each or some of the previous data, the previous file descriptor group (F), and the previous volume descriptor group (V) on the rewritable information recording medium (1) are used up, additional recording areas having predetermined sizes are obtained.

5. The information recording method according to any preceding claim, wherein, when a file of the previous data is deleted from the rewritable information recording medium (1) in the additional/modified data recording step, a corresponding file descriptor in the previous file descriptor group (F) is flagged in the additional file descriptor group (F2) recording step, so that a recording area defined by the flagged file descriptor is later used by overwriting.

6. The information recording method according to any preceding claim, wherein, in the additional/modified data, additional file descriptor group (F2), or additional volume descriptor group (V2) recording step, if an error is detected in or after recording of the additional or modified data, the additional file descriptor group (F2), or the additional volume descriptor group (V2) on the rewritable information recording medium (1), and if the error is not caused by overflowing of a corresponding recording area on the rewritable information recording medium (1), the additional or modified data, the additional file descriptor group (F2), or the additional volume descriptor group (V2) is recorded on the rewritable information recording medium (1) while avoiding an area on the rewritable information recording medium (1) where the error has occurred.

7. The information recording method according to any preceding claim, wherein, in the anchor updating step, if an error is detected in or after recording of the updated anchor (A), recording of subsequent additional or modified data on the rewritable information recording medium (1) is inhibited.

8. A carrier medium carrying processor readable code for controlling processor apparatus (2,3,4,5,6,7,8,9,10) to carry out the method of any one of claims 1 to 7.

9. An information recording and reproducing apparatus for recording additional or modified data on a rewritable information recording medium (1) on which previous data, a previous file descriptor group (F), a previous volume descriptor group (V), and a previous anchor (A) are recorded, **characterized in that** the apparatus comprises:
additional/modified data recording means (2,3,4,5,6,7,8,9,10) configured to record the additional or modified data on the rewritable information recording medium;
additional file descriptor group recording means (2,3,4,5,6,7,8,9,10) configured to record an additional file descriptor group on the rewritable information recording medium;
additional volume descriptor recording means (2,3,4,5,6,7,8,9,10) configured to record an additional volume descriptor group on the rewritable information recording medium; and
anchor updating means (2,3,4,5,6,7,8,9,10) configured to update the previous anchor recorded on the rewritable information recording medium,
wherein the additional/modified data recording means (2,3,4,5,6,7,8,9,10), the additional file descriptor group recording means(2,3,4,5,6,7,8,9,10), the additional volume descriptor recording means (2,3,4,5,6,7,8,9,10) and the anchor updating means (2,3,4,5,6,7,8,9,10) are operated in a consecutive manner.

10. The information recording and reproducing apparatus according to Claim 29, wherein each or some of the previous data, the previous file descriptor group (F), the previous volume descriptor group (V) and the previous anchor (A), are organized to have data lengths equal to or greater than a minimum recording unit allowed by the rewritable information recording medium and the information recording and reproducing apparatus, and the additional /modified data recording means (2,3,4,5,6,7,8,9,10), the additional file descriptor group recording means(2,3,4,5,6,7,8,9,10), the additional volume descriptor recording means (2,3,4,5,6,7,8,9,10) and the anchor updating means (2,3,4,5,6,7,8,9,10) are configured to record the additional or modified data, the additional file descriptor group (F2), the additional volume descriptor group (V2) and the updated anchor (A) so that they have data lengths equal to or greater than a minimum recording unit allowed by the rewritable information recording medium (1) and the information recording and reproducing apparatus.

11. The information recording and reproducing apparatus according to Claim 10, wherein each or some of the previous data, the previous file descriptor group (F), and the previous volume descriptor group (V) are recorded on the rewritable information recording medium (1) such that predetermined margins are kept in respective corresponding recording areas on the rewritable information recording medium (1) after the each or some of the previous data, the previous file descriptor group (F), and the previous volume descriptor group (V) have been recorded in the respective corresponding recording areas on the rewritable information recording medium (1).

12. The information recording and reproducing apparatus according to Claim 11, wherein, the additional/modified data recording means, the additional file descriptor group recording means, the additional volume descriptor recording means and the anchor updating means are configured so that when the predetermined margins kept in the respective corresponding recording areas of the each or some of the previous data, the previous file descriptor group (F), and the previous volume descriptor group (V) on the rewritable information recording medium (1) are used up, additional recording areas having predetermined sizes are obtained.

13. The information recording and reproducing apparatus according to any of claims 9 to 12, wherein, the additional/modified data recording means (2,3,4,5,6,7,8,9,10), the additional file descriptor group recording means(2,3,4,5,6,7,8,9,10), the additional volume descriptor recording means (2,3,4,5,6,7,8,9,10) and the anchor updating means (2,3,4,5,6,7,8,9,10) are configured so that when a file of the previous data is deleted from the rewritable information recording medium (1), a corresponding file descriptor (F) in the previous file descriptor group (F) is flagged, so that a recording area defined by the flagged file descriptor (F) is later used by overwriting.

14. The information recording and reproducing apparatus according to any of claims 9 to 13, wherein, the additional/modified data recording means (2,3,4,5,6,7,8,9,10), the additional file descriptor group recording means(2,3,4,5,6,7,8,9,10), the additional volume descriptor recording means (2,3,4,5,6,7,8,9,10) and the anchor updating means (2,3,4,5,6,7,8,9,10) are configured so that if an error is detected in or after recording of the additional or modified data, the additional file descriptor group (F2), or the additional volume descriptor group on the rewritable information recording medium (1), and if the error is not caused by overflowing of a corresponding recording area on the rewritable information recording medium, the additional or modified data, the additional file descriptor group (F2), or the additional volume descriptor group is recorded on the rewritable information recording medium (1) while avoiding an area on the rewritable information recording medium (1) where the error has occurred.

15. The information recording and reproducing apparatus according to any of claims 9 to 14, wherein, the additional/modified data recording means (2,3,4,5,6,7,8,9,10), the additional file descriptor group recording means(2,3,4,5,6,7,8,9,10), the additional volume descriptor recording means (2,3,4,5,6,7,8,9,10) and the anchor updating means (2,3,4,5,6,7,8,9,10) are configured so that if an error is detected in or after recording of the updated anchor (A), recording of subsequent additional or modified data on the rewritable information recording medium (1) is inhibited.

16. An information recording medium (1), **characterized in that** it comprises:
a data recording area for recording data;
a file descriptor recording area for recording a file descriptor (F) describing characteristics of the data;
a volume descriptor recording area for recording a volume descriptor (V) describing a root directory and volume information of the information recording medium (1);
an anchor recording area for recording an anchor pointing to the volume descriptor (V),
wherein previous data, a previous file descriptor group (F), a previous volume descriptor group (V) and a previous anchor (A) are recorded in respective corresponding recording areas on the information recording medium (1), and
wherein additional or modified data is recorded on the information recording medium (1) by the information recording method according to any one of Claims 1 through 7.
